# EUROPÄISCHE PATENTSCHRIFT

(11) **EP 1 625 786 B1**
(45) Veröffentlichungstag und Bekanntmachung des Hinweises auf die Patenterteilung: **21.05.2008**
(21) Anmeldenummer: 04450160.9
(22) Anmeldetag: 09.08.2004
(51) Int. Cl.: A01K 1/02

(54) **Behälter zum Transport und zur Aufbewahrung von Kleintieren**
Pet Carrier
Dispositif de transport pour animaux de compagnie

(43) Veröffentlichungstag der Anmeldung: 15.02.2006
(73) Patentinhaber: Mahmoud, Ashraf, 5640 Bad Gastein (AT)
(72) Erfinder: Mahmoud, Ashraf, 5640 Bad Gastein (AT)
(74) Vertreter: Castell, Klaus

(56) Entgegenhaltungen:
- US-A- 4 220 119
- US-A- 5 626 098
- US-A- 5 839 392
- US-B1- 6 345 591

## Beschreibung

Die Erfindung betrifft einen Behälter zum Transport und zur Aufbewahrung von Kleintieren oder dergleichen gemäß dem Oberbegriff von Patentanspruch 1.

Es ist vielfach erforderlich, Käfige und andere Behälter zur Aufbewahrung und zum Transport von Tieren zusammenlegbar auszuführen. Aus der US 5,626,098 A ist ein solcher klappbarer Tiertransportkäfig bekannt. Dabei sind Seitenwände entlang waagrechter Linien geteilt, um ein Zusammenklappen zu ermöglichen.

Es hat sich herausgestellt, dass die Handhabung eines Tiertransportkäfigs dieser bekannten Art unbefriedigend ist und dass insbesondere die Möglichkeiten einen solchen Käfig zu reinigen, von vielen Benützern als unzureichend angesehen werden.

Aufgabe der vorliegenden Erfindung ist es, einen Tiertransportkäfig anzugeben, der diese Nachteile vermeidet und verbesserte Gebrauchseigenschaften aufweist. Diese Aufgaben werden erfindungsgemäß durch die Aufgaben des kennzeichnenden Teiles von Patentanspruch 1 gelöst.

Für die Handhabung hat es sich als besonders vorteilhaft herausgestellt, wenn das Zusammenklappen des Tiertransportkäfigs dadurch erfolgen kann, dass die Vorderwand und die Rückwand zueinander bewegt werden, bis diese parallel zueinander im geringen Abstand aneinander liegen. Dabei ist es unter Anderem vorteilhaft, dass in der Vorderwand und/oder in der Rückwand befindliche Türen oder Zugangsöffnungen unbeeinflusst vom Vorgang des Zusammenklappens bleiben und diesen nicht behindern. Ein weiterer Vorteil der erfindungsgemäßen Lösung besteht darin, dass auch bei Käfigen und anderen Behältern mit großer Bodenfläche im zusammengeklappten Zustand relativ geringe Abmessungen erreicht werden können und der zusammengeklappte Behälter wie ein Koffer getragen werden kann. Ein besonderer Vorteil der erfindungsgemäßen Lösung besteht darin, dass die Herstellung mit Winkelprofilen möglich ist, die kostengünstig sind und die Verletzungsgefahr minimieren.

Ein besonders einfacher Zugang zum Inneren des Behälters ist gegeben, wenn in der Vorderwand eine große Schiebetür vorgesehen ist, so dass die Vorderwand aus einer fixen Hälfte und einer verschiebbaren Hälfte besteht. Alternativ dazu können auch zwei gegeneinander verschiebbare Hälften vorgesehen sein.

Eine besonders begünstigte Ausführungsvariante der Erfindung sieht vor, dass der Querschnitt trapezförmig ist, wobei die Breite der Seitenwände an ihrer Unterkante größer ist als an ihrer Oberkante. Dadurch können die Abmessungen des Behälters im zusammengeklappten Zustand besonders klein gehalten werden, obwohl ein großer Lebensraum für die im Behälter aufbewahrten Tiere gegeben ist. Ein besonderer Vorteil der erfindungsgemäßen Lösung besteht darin, dass der Transport auf Sitzen von Kraftfahrzeugen durch die besondere Form des Behälters begünstigt ist.

Hinsichtlich der Bodenplatte sind zwei unterschiedliche Ausführungen denkbar. Zum einen können zwei Hälften der Bodenplatte gelenkig miteinander verbunden sein, so dass sich die Bodenplatte beim Zusammenklappen in der Form eines gleichschenkeligen Dreieckes nach oben bewegt. Alternativ dazu ist es möglich, dass die beiden Hälften der Bodenplatte nicht miteinander verbunden sind und beim Zusammenklappen einzeln nach oben geschwenkt werden können. Diese Ausführungsvariante ermöglicht es, unter größtmöglicher Verwendung von Gleichteilen Behälter mit unterschiedlichen Abmessungen herzustellen. So können unabhängig von der Breite der Bodenplatte im Gebrauchszustand die Hälften gleich breit ausgebildet sein, wobei die unterschiedliche Breite durch eine mehr oder weniger große Überlappung der beiden Hälften erreicht wird.

Die Zugänglichkeit des Behälters kann in bevorzugter Weise dadurch erhöht werden, dass mindestens eine Hälfte einer Seitenwand als Tür ausgebildet ist.

In der Folge wird die vorliegenden Erfindung anhand der in den Figuren dargestellten Ausführungsbeispielen näher erläutert. Es zeigen:
- Fig. 1: einen erfindungsgemäßen Behälter in einer axonometrischen Darstellung;
- Fig. 2: einen schematischen Schnitt durch den Behälter;
- Fig. 3: eine schematische Ansicht von oben; und
- Fig. 4: einen schematischen Schnitt einer weiteren Ausführungsvariante entsprechend der Fig. 2.

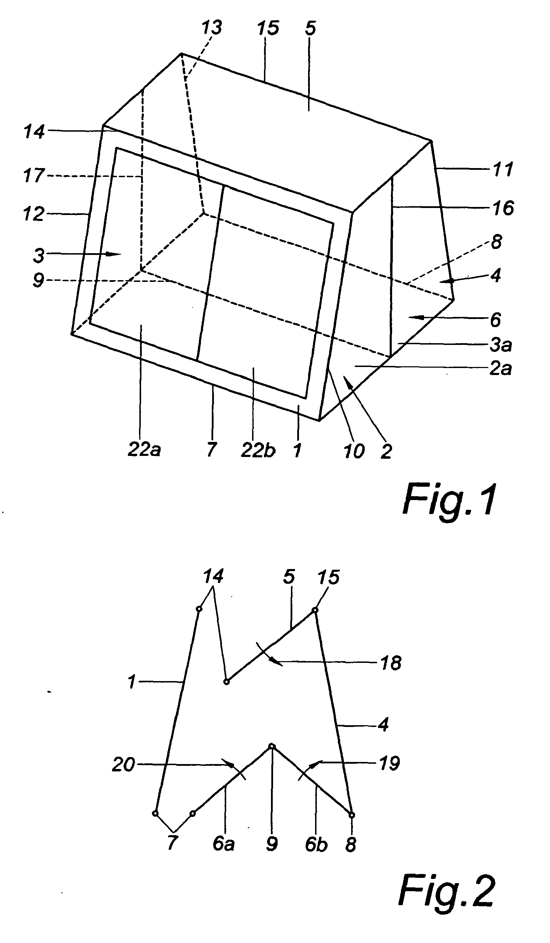

Der Behälter von Fig. 1 besteht aus einer Vorderwand 1, seitlich daran anschließenden Seitenwänden 2, 3, einer Rückwand 4, einer Deckplatte 5 und einer Bodenplatte 6. Die Bodenplatte 6 besteht aus zwei Hälften 6a, 6b, wobei die vordere Hälfte 6a der Bodenplatte 6 entlang einer unteren Vorderkante 7 gelenkig mit der Vorderwand 1 verbunden ist. Die hintere Hälfte 6b der Bodenplatte 6 ist entlang einer hinteren Unterkante 8 mit der Rückwand 4 gelenkig verbunden. Die beiden Hälften 6a, 6b sind entlang einer mittleren Gelenkachse 9 miteinander gelenkig verbunden.

Die rechte Seitenwand 2 besteht aus einer vorderen Hälfte 2a und einer hinteren Hälfte 2b, wobei die vordere Hälfte 2a entlang einer rechten vorderen Seitenkante 10 gelenkig mit der Vorderwand 1 verbunden ist. Analog dazu ist die hintere Hälfte 2b der rechten Seitenwand 2 entlang einer hinteren rechten Seitenkante 11 mit der Rückwand 4 verbunden. In analoger Weise sind die beiden Hälften 3a, 3b der linken Seitenwand 3 entlang einer linken vorderen bzw. hinteren Seitenkante 12, 13 mit der Vorderwand 1 beziehungsweise der Rückwand 4 verbunden.

Die Deckplatte 5 ist entlang einer oberen Vorderkante 14 mit der Vorderwand 1 verbunden und entlang einer oberen Hinterkante 15 mit der Rückwand 4 verbunden.

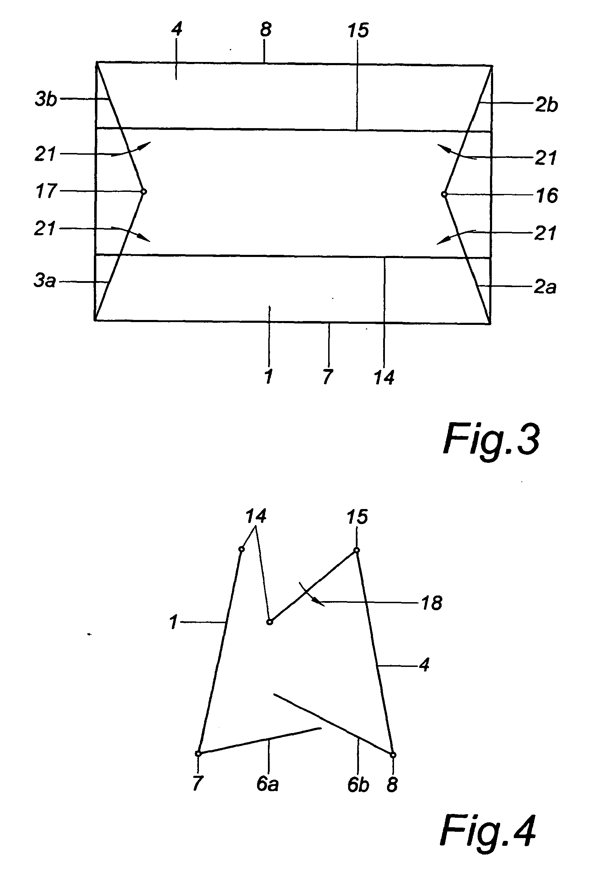

In den folgenden Fig. 2 und Fig. 3 wird das Zusammenklappen des erfindungsgemäßen Behälters erklärt. Zunächst wird die Verbindung der vorderen Hälfte 6a der Bodenplatte 6 mit der Vorderwand 1 an der unteren Vorderkante 7 gelöst und gleichzeitig wird die Verbindung der Deckplatte 5 mit der Vorderwand 1 an der oberen Vorderkante 14 gelöst. Danach wird die Deckplatte 5 entlang der oberen Hinterkante 15 entlang des Pfeils 18 nach unten geschwenkt und gleichzeitig werden die beiden Hälften 6a, 6b der Bodenplatte 6 entlang der Pfeile 19, 20 so verschwenkt, dass die Gelenkachse 9 nach oben bewegt wird und die untere Vorderkante 7 der vorderen Hälfte 6a der Bodenplatte 6 in Richtung der hinteren Unterkante 8 bewegt wird. Sobald die Deckplatte 5 und die beiden Hälften 6a, 6b der Bodenplatte 6 im Wesentlichen an der Rückwand 4 anliegen, werden, wie in Fig. 3 gezeigt, die Hälften 2a, 2b; 3a, 3b der Seitenwände 2, 3 entlang der Pfeile 21 nach innen verschwenkt. Die beiden Gelenksachsen 16, 17, die die Hälften 2a, 2b; 3a, 3b verbinden, wandern dabei nach innen. Gleichzeitig nähern sich die Vorderwand 1 und die Rückwand 4 so lange, bis ein flaches rechteckiges Paket entsteht.

Fig. 4 zeigt eine alternative Ausführungsvariante der Erfindung, bei der eine Hälfte 6a der Bodenplatte unlösbar gelenkig entlang der unteren Vorderkante 7 mit der Vorderwand 1 verbunden ist, während die hintere Hälfte 6b der Bodenplatte 6 unlösbar gelenkig entlang der unteren Hinterkante 8 mit de Rückwand 4 verbunden ist.

An der Vorderwand 1 ist eine Schiebetür vorgesehen, die aus einer fixen Hälfte 22a und einer verschiebbaren Hälfte 22b besteht. Alternativ dazu ist es jedoch auch möglich, dass beide Hälften 22a, 22b gegeneinander verschiebbar sind, um einen optimalen Zugang zum Inneren des Behälters zu gewährleisten.

Der erfindungsgemäße Behälter ist bevorzugt als Käfig ausgebildet, wobei als Material für die Herstellung der Wände 1, 2, 3, 4, 5, 6, verzinkter Stahl, Edelstahl oder ein Leichtmetall in Frage kommt. Alternativ dazu ist jedoch für gewisse Anwendungsfälle auch eine Verwendung von Kunststoff möglich.

## Patentansprüche

1. Behälter zum Transport und zur Aufbewahrung von Kleintieren oder dergleichen, mit einer Bodenplatte (6), mit einer Vorderwand (1), einer Rückwand (4), mit Seitenwänden (2, 3) und mit einer Deckplatte (5), welche Platten (1, 2, 3, 4, 5, 6), zumindest teilweise untereinander gelenkig verbunden sind, um ein Zusammenklappen des Behälters zu ermöglichen, wobei beide Seitenwände (2, 3) jeweils aus einer vorderen Hälfte (2a, 3a) und aus einer hinteren Hälfte (2b, 3b) bestehen, die gelenkig mit der Vorderwand (1) bzw. mit der Rückwand (4) verbunden sind und die untereinander entlang einer in Gebrauchsstellung im Wesentlichen senkrecht angeordneten Schwenkachse (16, 17) gelenkig verbunden sind, und dass die Bodenplatte (6) in zwei Hälften (6a, 6b) geteilt ausgeführt ist und gelenkig mit der Vorderwand (1) oder mit der Rückwand (4) oder mit beiden verbunden ist, sowie dass die Deckplatte (5) gelenkig mit der Vorderwand (1) oder mit der Rückwand (4) verbunden ist, **dadurch gekennzeichnet, dass** der Querschnitt trapezförmig ist, wobei die Breite der Seitenwände (2, 3) an ihrer Unterkante größer ist als an ihrer Oberkante.

2. Behälter nach Anspruch 1, **dadurch gekennzeichnet, dass** in der Vorderwand (1) eine Schiebetür vorgesehen ist.

## Claims

1. A container for transporting and holding small animals or the like, comprising a base panel (6), comprising a front wall (1), a rear wall (4), comprising side walls (2, 3) and comprising a cover panel (5) which panels (1, 2, 3, 4, 5, 6) are at least partially connected to one another in an articulated manner to allow the container to be collapsed, wherein both side walls (2, 3) each consist of a front half (2a, 3a) and a rear half (2b, 3b), which are connected to the front wall (1) or to the rear wall (4) in an articulated manner and which are connected to one another in an articulated manner along a pivot axis (16, 17) arranged substantially perpendicularly in the usage position, and the base panel (6) is divided into two halves (6a, 6b) and is connected to the front wall (1) or to the rear wall (4) or to both in an articulated manner and the cover panel (5) is connected to the front wall (1) or to the rear wall (4) in an articulated manner, **characterised in that** the cross-section is trapezoidal, wherein the width of the side walls (2, 3) at their lower edge is greater than at their upper edge.

2. The container according to claim 1, **characterised in that** a sliding door is provided in the front wall (1).

## Revendications

1. Conteneur pour le transport et la conservation de petits animaux ou autres, avec une plaque de fond (6), une paroi avant (1), une paroi arrière (4) et des parois latérales (2, 3), ainsi qu'avec une plaque couvrante (5), lesdites plaques (1, 2, 3, 4, 5, 6) étant au moins partiellement reliées de façon articulée entre elles afin de pouvoir plier le conteneur, dans lequel les deux parois latérales (2, 3) étant chacune constituées d'une moitié avant (2a, 3a) et d'une moitié arrière (2b, 3b) qui sont reliées de façon articulée à la paroi avant (1) ou la paroi arrière (4), et qui sont reliées entre elles le long d'un axe de pivotement (16, 17) disposé essentiellement de façon verticale, et dans lequel la plaque de fond (6) est conçue de manière à être divisée en deux moitiés (6a, 6b) et à être reliée de façon articulée à la paroi avant (1) ou à la paroi arrière (4) ou encore aux deux, et dans lequel la plaque couvrante (5) est reliée de façon articulée à la paroi avant (1) ou à la paroi arrière (4), **caractérisé en ce que** la section transversale est trapézoïdale, la largeur des parois latérales (2, 3) étant plus grande au niveau de ses bords inférieurs qu'au niveau de ses bords supérieurs.

2. Conteneur selon la revendication 1, **caractérisé en ce qu'**une porte coulissante est prévue dans la paroi avant (1).
